# FASCICULE DE BREVET EUROPEEN

(11) **EP 3 210 166 B1**
(45) Date de publication et mention de la délivrance du brevet: **29.04.2020**
(21) Numéro de dépôt: 15788158.2
(22) Date de dépôt: 08.10.2015
(51) Int. Cl.: G06K 9/62, G07D 7/20

(54) **PROCEDE DE COMPARAISON D'IMAGES NUMERIQUES**
VERFAHREN ZUM VERGLEICHEN DIGITALER BILDER
METHOD OF COMPARING DIGITAL IMAGES

(30) Priorité: 22.10.2014 FR 1460148
(43) Date de publication de la demande: 30.08.2017
(73) Titulaire: SURYS, 77600 Bussy-Saint-Georges (FR)
(72) Inventeur: PIC, Marc, F-92100 Boulogne Billancourt (FR)
(74) Mandataire: Bouvier, Thibault
(86) Numéro de dépôt international: PCT/FR2015/052711
(87) Numéro de publication internationale: WO 2016/062937

(56) Documents cités:
- ANDREAS LAIKA ET AL: "A review of different object recognition methods for the application in driver assistance systems", EIGHTH INTERNATIONAL WORKSHOP ON IMAGE ANALYSIS FOR MULTIMEDIA INTERACTIVE SERVICES (WIAMIS '07), 1 juin 2007 (2007-06-01), pages 10-10, XP055195445, DOI: 10.1109/WIAMIS.2007.10 ISBN: 978-0-76-952818-2
- ] E Dubois ET AL: "Robust Detection of Skew in Document Images", IEEE Trans. Consumer Electron. IEEE Trans. Consumer Electron. Image Commun. J. MA4. Image Commun. J, 1 février 1997 (1997-02-01), pages 181-184, XP055195497, Extrait de l'Internet: URL:http://ieeexplore.ieee.org/ielx4/83/11 966/00551708.pdf?tp=&arnumber=551708&isnum ber=11966 [extrait le 2015-06-12]
- NOWAK E ET AL: "Sampling strategies for bag-of-features image classification", LECTURE NOTES IN COMPUTER SCIENCE/COMPUTATIONAL SCIENCE > (EUROCRYPT )CHES 2008 (LNCS), SPRINGER VERLAG, DE, vol. 3954, 1 janvier 2006 (2006-01-01), pages 490-503, XP002389857, DOI: 10.1007/11744085_38 ISBN: 978-3-540-24128-7
- CONNELLY BARNES ET AL: "The Generalized PatchMatch Correspondence Algorithm", 5 septembre 2010 (2010-09-05), COMPUTER VISION - ECCV 2010, SPRINGER BERLIN HEIDELBERG, BERLIN, HEIDELBERG, PAGE(S) 29 - 43, XP019150695, ISBN: 978-3-642-15557-4 section 3 section 4.2
- Clarisse Mandridake ET AL: "Towards Fully Automatic ID Document frauds detection", 8ème WORKSHOP INTERDISCIPLINAIRE SUR LA SÉCURITÉ GLOBALE, 30 janvier 2014 (2014-01-30), XP055195492, Extrait de l'Internet: URL:http://www.agence-nationale-recherche. fr/fileadmin/documents/2014/wisg/actes/DOC SCOPE.pdf [extrait le 2015-06-12]

## Description

### DOMAINE DE L'INVENTION

La présente invention concerne la vérification d'images numériques, et en particulier l'authentification de copies d'images, typiquement dans le domaine de la sécurisation d'objets ou de documents, par exemple un document d'identité, sur lesquels sont apposés de telles images.

Par concision, il ne sera fait référence ici qu'à l'authentification de documents d'identité officiels (carte d'identité, passeport, permis de conduire, etc.) ou non officiels (carte d'abonnement, etc.) qui comprennent une image, en particulier une photographie de leur titulaire. Il est entendu que l'invention peut être mise en œuvre pour tout type de documents ou d'étiquettes comprenant une image, c'est à dire une représentation graphique, dont on souhaite vérifier l'authenticité.

A cet effet, une autorité officielle (police, douane, etc.) qui souhaite vérifier l'authenticité d'un document d'identité possède des moyens particuliers et complexes.

Cependant, il apparait aujourd'hui un besoin de pouvoir vérifier ou prouver l'authenticité d'un document également par le titulaire du document, dont les moyens sont très inférieurs aux moyens officiels. On citera divers procédés connus dans ce domaine, par exemple du document FR2952738 déposé par la demanderesse.

Dans ce contexte, il est proposé ici une solution de détection d'un faux document officiel astucieuse et simple de mise en œuvre.

A cet effet, selon un premier de ses objets, l'invention concerne un procédé de comparaison d'une image test numérique à une image de référence numérique, mis en oeuvre par ordinateur, comprenant une étape consistant à :
- identifier au moins deux zones d'intérêt dans l'image de référence, chaque zone d'intérêt comprenant un ensemble de pixels.

Il est essentiellement caractérisé en ce qu'il comprend des étapes consistant à :
- sélectionner de façon aléatoire l'une au moins des zones d'intérêt identifiées dans l'image de référence,
- sélectionner au moins un sous-ensemble de l'image de référence, ledit sous-ensemble comprenant au moins un pixel d'au moins une zone d'intérêt sélectionnée,
- pour chaque sous-ensemble sélectionné de l'image de référence, sélectionner par similarité un sous-ensemble correspondant de l'image test, et
- comparer ledit sous-ensemble de l'image test au sous-ensemble correspondant de l'image de référence.

Le procédé comprend optionnellement en outre une étape consistant à authentifier ladite image test en fonction du résultat de la comparaison.

On peut prévoir au moins l'une des étapes consistant à :
- sélectionner de façon aléatoire une forme géométrique donnée parmi un ensemble de formes géométriques prédéterminées enregistrées dans une mémoire, et appliquer la forme sélectionnée audit sous-ensemble sélectionné dans l'image de référence ; et
- sélectionner de façon aléatoire une taille donnée parmi un ensemble de tailles prédéterminées enregistrées dans une mémoire, ou sélectionner la taille du sous-ensemble en fonction de la définition de l'image test, et appliquer ladite taille sélectionnée audit sous-ensemble de l'image de référence.

On peut prévoir des étapes consistant à :
- orienter ledit sous-ensemble de l'image de référence dans le plan de l'image, par rapport à une droite de référence selon un angle d'orientation (α) dont la valeur est aléatoire, et
- enregistrer dans une mémoire ladite valeur de l'angle d'orientation (α).

On peut prévoir en outre une étape consistant à redresser l'image test.

On peut prévoir une étape consistant à :
- numériser une source grâce à un capteur optique d'un objet communicant équipé d'un flash pilotable ou un capteur optique de webcam équipée d'un flash pilotable et connectée électriquement à un ordinateur,

Le procédé comprenant en outre :
- enregistrer dans une mémoire respectivement dudit objet communicant ou dudit ordinateur ladite image test, et
- activer sélectivement le flash selon une séquence de valeurs binaires de préférence aléatoire ; le flash étant sélectivement allumé selon l'une des valeurs binaires et éteint selon l'autre des valeurs binaires.

On peut prévoir que l'étape consistant à identifier au moins deux zones d'intérêt comprend une étape consistant à comparer à une valeur seuil les variations de gradient de luminance, éventuellement dans plusieurs directions, d'un ensemble de pixels proches les uns des autres dans l'image de référence pour identifier une zone d'intérêt.

On peut prévoir en outre des étapes consistant à :
- calculer une empreinte du sous-ensemble sélectionné dans l'image de référence, et
- calculer une empreinte correspondante du sous-ensemble correspondant dans l'image test ;
l'étape de comparaison consistant à comparer l'empreinte du sous-ensemble sélectionné dans l'image de référence à l'empreinte du sous-ensemble correspondant sélectionné dans l'image test.

On peut prévoir une étape consistant à comparer le résultat de la différence entre l'empreinte du sous-ensemble sélectionné de l'image de référence et l'empreinte du sous-ensemble correspondant de l'image test à une valeur seuil, ladite valeur du seuil dépendant de préférence des propriétés calculées dans les empreintes.

On peut prévoir que l'image de référence est obtenue à partir d'une source comprenant un composant optiquement variable plan (par exemple un hologramme, un DOVID pour diffractive *optically variable image device* en anglais, une encre variable, etc.), ledit composant optiquement variable comprenant un ensemble de sous-images dont le contenu informatif varie en fonction de l'un au moins des paramètres suivants : l'angle d'observation, l'angle d'éclairage et la nature du moyen d'éclairement,

Le procédé comprenant :
De mettre en mouvement relatif un capteur optique et l'hologramme selon une pluralité d'angles d'inclinaison,
D'enregistrer un ensemble d'images test de l'hologramme pour une pluralité d'inclinaisons (β, γ) du capteur optique, et
De déterminer la valeur de l'inclinaison (β, γ) du capteur optique à chaque image test enregistrée.

On peut prévoir en outre des étapes consistant à :
envoyer depuis un serveur à un objet communicant comprenant ledit capteur optique une requête d'instructions comprenant une pluralité d'inclinaisons (β', γ'),
afficher sur un écran dudit objet communicant un indice graphique directionnel indiquant dans quelle(s) direction(s) incliner ledit objet communicant pour atteindre les valeurs d'angles (β, γ) reçues dans la requête.

Selon un autre de ses objets, l'invention concerne un programme d'ordinateur comprenant des instructions de code de programme pour la mise en œuvre du procédé selon l'invention lorsque ledit programme est exécuté sur un ordinateur.

L'invention est avantageusement mise en œuvre par un objet communicant, en particulier un téléphone portable.

Grâce à l'invention, aucun fichier image n'est transmis intégralement entre ledit objet communicant et le serveur, ce qui rend la reconstruction de l'image de référence ou de la source plus difficile, voire improbable, en cas d'interception de la communication. L'image intégrale de la source n'est jamais transmise par le serveur audit objet communicant et le fichier image n'est jamais transmis intégralement dudit objet communicant au serveur. En outre, deux séquences d'authentification successives sont toujours différentes et imprédictibles pour un tiers qui arriverait à intercepter la communication entre le serveur et ledit objet communicant, ce qui rend l'invention très efficace en termes de sécurité.

Par rapport aux procédés mettant en œuvre une lecture de carte à puce ou une lecture sans contact (NFC pour Near Field Communication en anglais), l'invention est plus simple puisqu'elle ne nécessite ni calculateur cryptologique ni module de communication sans fil autre que celui déjà présent dans ledit objet communicant.

En outre, il n'est pas possible pour un tiers de lire l'image test sans contact visuel avec celle-ci. Une lecture de celle-ci par un tiers à l'insu du propriétaire est donc très peu probable.

En particulier dans le cas où la source comprend un élément optiquement variable, une photocopie ou une photographie simple de cette source ne suffit pas à reproduire l'image de référence car sur ladite photocopie ou ladite photographie, le contenu informatif d'un seul angle est représenté, et comme tous les angles ne sont pas capturés il est donc impossible de reconstituer l'image de référence.

D'autres caractéristiques et avantages de la présente invention apparaîtront plus clairement à la lecture de la description suivante donnée à titre d'exemple illustratif et non limitatif et faite en référence aux figures annexées.

### DESCRIPTIF DES DESSINS

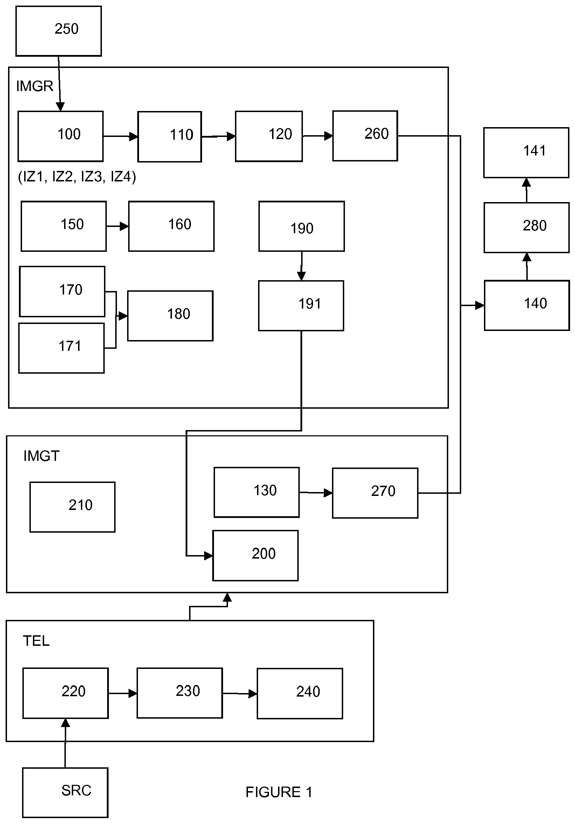

la figure 1 illustre un mode de réalisation du procédé selon l'invention,
la figure 2 illustre des zones d'intérêt et un sous-ensemble sélectionné dans une image de référence,
la figure 3 illustre, dans une image test, le sous-ensemble correspondant au sous-ensemble sélectionné dans la figure 2, et
la figure 4 illustre l'inclinaison possible d'un objet communicant selon un angle β et un angle γ par rapport à une image source plane définissant un plan xOy.

### DESCRIPTION DETAILLEE

Par concision :
- « aléatoire » est entendu comme aléatoire ou pseudo aléatoire ;
- « centre » est entendu comme le centre ou le barycentre d'une forme géométrique ou d'un bloc de pixels.

### Définitions

Le principe de l'invention est basé sur la comparaison d'une image test numérique à une image de référence numérique, et pour estimer, en fonction du résultat de la comparaison, si l'image test et l'image de référence ont été réalisées à partir d'une même source.

Par source SRC, on entend le sujet d'une image numérique, c'est à dire tout ou partie d'au moins un élément matériel dont il est possible de réaliser une image numérique. Une source peut comprendre ou être tout ou partie d'un objet, un paysage, un être vivant, un document, une image, etc.

Par concision, on ne fait référence ici qu'à une source comprenant tout ou partie d'un document d'identité.

Par document d'identité, on entend un document unique, officiel ou non, qui comprend une image et un ensemble d'informations relatives à l'identité du titulaire dudit document. Le document d'identité peut comprendre une image unique, par exemple une photographie de son titulaire, ou une image reproduite de multiple fois, par exemple un logo présent sur d'autres documents d'identité. Le document d'identité peut comprendre non seulement des éléments liés à la personnalisation du document (donc variables d'un document à l'autre) mais aussi des éléments de sécurité tels que des éléments optiquement variables (DOVID, encres variables, paillettes...). Il peut également comprendre un hologramme, typiquement personnalisé par exemple par des éléments imprimés.

Par image de référence IMGR, on entend une image numérique de la source. De préférence, elle est enregistrée dans une base de données d'images de référence sur un serveur lors d'une étape d'initialisation. De préférence, l'image de référence est en haute définition. L'image de référence peut être complétée (enrichie) par des descripteurs techniques non visibles sur une seule image, par exemple grâce aux spécificités de l'encre utilisée (encre fluorescente par exemple), aux pas de réseaux utilisés dans le cas d'un hologramme, etc.

Par image test IMGT, on entend une image numérique, qui est normalement également une image numérique de la source, et que l'on souhaite comparer à l'image de référence. La définition de l'image test est inférieure ou égale à la définition de l'image de référence. L'image test est typiquement issue d'un capteur optique, par exemple d'un objet communicant, en particulier un téléphone portable.

L'image test peut être une copie de l'image de référence ou produite indépendamment de celle-ci. Par exemple, l'image test et l'image de référence sont produites par deux moyens de capture optique différents. L'invention permet alors de déterminer, par comparaison des deux images, si celles-ci proviennent de la même source. L'image test peut également être une copie présumée de l'image de référence. L'invention permet alors de déterminer, par comparaison des deux images, si l'image test est une copie authentique de l'image de référence.

L'image test et l'image de référence sont décomposées en pixels et en blocs de pixels, ci-après « pixels» par concision. Les coordonnées de chaque pixel sont connues.

Si l'image test et l'image de référence proviennent de la même source, ou si l'image test est une copie de l'image de référence, il existe une correspondance entre un bloc de l'image test et un bloc de l'image de référence.

Si les deux images ont la même taille et la même définition, alors il existe une relation bijective entre les coordonnées des pixels de l'image test et celles des pixels de l'image de référence, c'est-à-dire que les valeurs d'un pixel donné de l'image de référence sont identiques à celles du pixel de mêmes coordonnées dans l'image test. Une fois un ensemble de pixels sélectionnés dans une image de référence, on peut donc sélectionner par similarité un ensemble de pixels correspondants dans l'image test ; les pixels correspondant dans l'image test ayant les mêmes coordonnées (au rapport d'échelle près) que celles des pixels de l'image de référence.

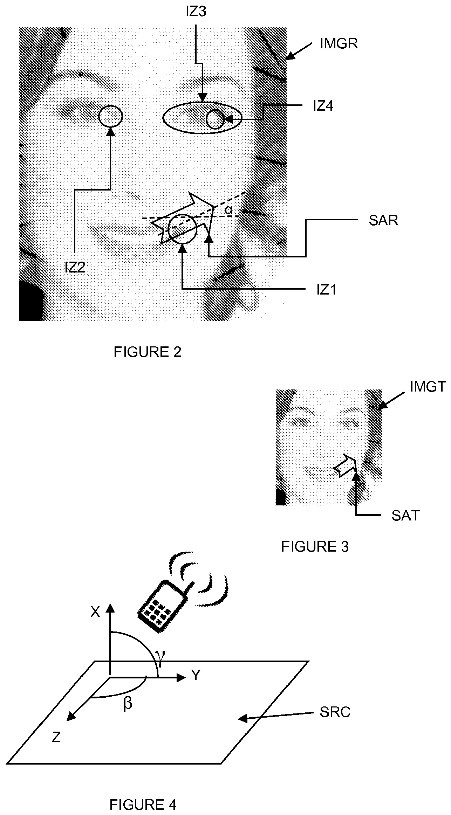

Toutefois, généralement la définition et la taille de l'image test sont toutes deux inférieures respectivement à la définition et à la taille de l'image de référence, comme illustré figure 2 et figure 3. Il existe alors un rapport d'échelle entre la taille de l'image test et la taille de l'image de référence, et les blocs de pixels correspondants ont les mêmes coordonnées au rapport d'échelle près.

La taille ou la définition de l'image test peut être envoyée au serveur.

### Principe

Plutôt que de comparer la totalité de l'image test à l'image de référence, ce qui serait peu sécurisé et chronophage, on prévoit de traiter l'image de référence afin de sélectionner au moins un sous-ensemble de l'image de référence, de sélectionner au moins un sous-ensemble correspondant de l'image test, et de comparer uniquement le ou les sous-ensembles sélectionné(s) de l'image de référence avec le ou les sous-ensembles correspondant(s) de l'image test.

### Traitement numérique de l'image de référence.

On prévoit une étape consistant à identifier 100 un ensemble de zones d'intérêt dans l'image de référence.

### Identification d'une zone d'intérêt de l'image de référence

Une zone d'intérêt est une partie, ou sous-ensemble, de l'image de référence, comprenant un ensemble de pixels.

Toute image de référence contient des pixels qui présentent des variations de gradient de luminance.

Selon une première variante, on prévoit que l'ensemble des pixels qui présentent des variations de gradient de luminance, éventuellement dans plusieurs directions, supérieures à une valeur seuil définissent une zone d'intérêt. L'identification peut ainsi être effectuée automatiquement par un logiciel de traitement d'image du marché.

On peut donc prévoir une étape consistant à comparer 250 à une valeur seuil les variations de gradient de luminance, éventuellement dans plusieurs directions, d'un ensemble de pixels proches les uns des autres dans l'image de référence pour identifier une zone d'intérêt. Par « proche » on entend dont la distance entre deux pixels est inférieure à une valeur seuil, et par exemple des pixels adjacents deux à deux.

Par exemple sur la figure 2, on a représenté quatre zones d'intérêt IZ1, IZ2, IZ3, IZ4, qui ont chacune une forme discale ou elliptique.

Selon une deuxième variante, une image de référence peut être affichée sur un écran, tactile ou non. Dans ce cas, une zone d'intérêt peut également être définie graphiquement par un opérateur, par exemple avec un dispositif de pointage tel qu'une souris, un stylet, etc. associé audit écran.

Selon une troisième variante, on peut également prévoir qu'une zone d'intérêt est définie par l'ensemble des pixels compris dans une forme donnée prédéterminée, dont chacun des paramètres parmi la taille et la position dudit ensemble est prédéterminé ou sélectionné aléatoirement. On peut aussi prévoir que la forme est sélectionnée aléatoirement parmi un ensemble de formes prédéterminées. Une possibilité étant de désigner une zone prédéfinie, par exemple par un échantillonnage dense de l'image de référence.

On peut aussi prévoir qu'une zone d'intérêt est définie selon l'une au moins des techniques suivantes : à l'aide d'une méthode d'apprentissage, par exemple à l'aide d'un détecteur et d'un algorithme de reconnaissance de formes ; en se basant sur la saillance au sein de l'image de référence

Toutes les variantes précédemment décrites sont combinables.

Les zones d'intérêt de chaque image de référence, ou l'adresse des centres des zones d'intérêt, peuvent être enregistrées dans la base de données.

Une fois une zone d'intérêt identifiée, par exemple la zone IZ1 sur la figure 2, les coordonnées des pixels de la zone d'intérêt, ou au moins les coordonnées du pixel du centre de la zone d'intérêt, sont connues.

La position d'une zone d'intérêt est connue de façon absolue par les coordonnées des pixels ou de façon relative, en référence à des repères, par exemple les bords de l'image de référence.

L'un au moins des paramètres parmi la dimension, la forme, la taille, la surface et l'aire d'une zone d'intérêt peut être définie préalablement, par exemple en fonction de la valeur du ou des gradients de luminance. La valeur de la dimension peut être choisie en fonction de la résolution de l'image test.

On prévoit une étape 110 consistant à sélectionner, de préférence de façon aléatoire, l'une au moins des zones d'intérêt identifiées. On peut aussi prévoir d'enregistrer les zones d'intérêt sélectionnées, de sorte qu'une zone d'intérêt donnée ne puisse être sélectionnée pendant une durée prédéfinie ou définitivement.

### Sous-ensemble(s) SAR

On prévoit de sélectionner 120 au moins un sous-ensemble SAR de l'image de référence. Chaque sous-ensemble comprend l'un au moins des points (pixels) d'au moins une zone d'intérêt sélectionnée.

Un sous-ensemble donné peut comprendre tout ou partie d'une zone d'intérêt donnée, ou d'une pluralité de zones d'intérêt. Une zone d'intérêt donnée peut comprendre tout ou partie d'un sous-ensemble donné.

Une zone d'intérêt peut être définie sans pour autant être comprise dans un sous-ensemble (par exemple, IZ2, IZ3, IZ4 ne sont pas comprises dans SAR).

### Position du sous-ensemble SAR.

La position du centre du sous-ensemble SAR dans l'image de référence dépend notamment de la position de la ou des zones d'intérêt sélectionnées.

La sélection aléatoire d'une zone d'intérêt ou d'une pluralité de zones d'intérêt rend la position du centre du sous-ensemble aléatoire dans l'image de référence.

### Forme du sous-ensemble SAR.

La forme du sous-ensemble SAR peut être une forme géométrique prédéterminée, régulière ou non. Elle peut dépendre du nombre et de la position des zones d'intérêt sélectionnées en cas de pluralité de zones sélectionnées.

En particulier, on peut prévoir de sélectionner 150, de préférence de façon aléatoire, une forme géométrique donnée parmi un ensemble de formes géométriques prédéterminées enregistrées dans une mémoire ; et d'appliquer 160 la forme sélectionnée audit sous-ensemble. Celui-ci prend alors ladite forme sélectionnée.

Par exemple la forme peut être un polygone, un caractère alphanumérique, une police de caractère, etc. Sur la figure 2, la forme du sous-ensemble est une flèche pleine.

### Orientation du sous-ensemble SAR.

Une image de référence est ordonnée, par exemple par le contenu de l'image même (typiquement un visage), ce qui définit des directions horizontales et verticales.

Le sous-ensemble SAR peut donc être orienté 190 selon un angle d'orientation a, dans le plan de l'image, par rapport à une droite de référence. On peut prévoir une orientation prédéterminée ou une orientation aléatoire du sous-ensemble. On peut donc enregistrer 191 dans une mémoire la valeur d'un angle d'orientation α. La valeur de l'angle d'orientation α peut également être choisie de façon aléatoire, pour chaque image test.

Par exemple, une fois la valeur α et la position du centre d'un sous-ensemble déterminées, ce sous-ensemble peut être orienté de l'angle α par rapport à une droite de référence.

Deux sous-ensembles qui ont une position (dans l'image) et une taille identiques mais deux orientations, c'est à dire deux valeurs α différentes, ont deux empreintes différentes (voir ci-après) car ils n'englobent pas exactement les mêmes pixels. Le choix d'une valeur d'orientation α aléatoire permet donc de générer une empreinte dont la valeur est également aléatoire.

Une fois le sous-ensemble de l'image de référence orienté selon un angle α, le sous-ensemble correspondant de l'image test est orienté 200 du même angle α, comme illustré figure 2, la valeur α étant dans ce cas transmise à l'objet communicant par le serveur.

### Taille du sous-ensemble.

La taille du sous-ensemble peut être prédéterminée. Elle peut aussi dépendre par exemple du nombre et de la position des zones d'intérêt sélectionnées en cas de pluralité de zones sélectionnées.

En particulier, on peut prévoir de sélectionner 170, de préférence de façon aléatoire, une taille donnée parmi un ensemble de tailles prédéterminées enregistrées dans une mémoire ; et appliquer 180 ladite taille audit sous-ensemble de l'image de référence. La taille dudit sous-ensemble est alors la taille sélectionnée.

On peut aussi prévoir de sélectionner 171 la taille du sous-ensemble en fonction de la définition de l'image de référence.

En cas de pluralité de sous-ensembles, on peut prévoir que chaque sous-ensemble sélectionné possède une forme géométrique prédéterminée ou une taille qui lui est propre.

Une fois la position, la forme, la taille, et l'éventuelle orientation du sous-ensemble sélectionné connus, les coordonnées de l'ensemble des pixels dudit sous-ensemble sélectionné sont connues.

### Calcul des empreintes

De préférence, on prévoit de calculer 260 l'empreinte du sous-ensemble sélectionné SAR dans l'image de référence IMGR, et de calculer 270 l'empreinte du sous-ensemble correspondant SAT dans l'image test IMGT, ce qui permet de comparer l'empreinte du sous-ensemble SAR sélectionné dans l'image de référence à l'empreinte du sous-ensemble correspondant SAT sélectionné dans l'image test.

De préférence, on prévoit une étape consistant à calculer l'empreinte de chaque sous-ensemble sélectionné de l'image de référence.

Lorsqu'une empreinte d'un sous-ensemble sélectionné dans l'image de référence est calculée, une empreinte correspondante, c'est-à-dire avec le même algorithme de calcul, est calculée pour le sous-ensemble correspondant dans l'image test.

Chaque empreinte comprend le calcul d'au moins l'une des propriétés du sous-ensemble sélectionné parmi :
des descripteurs de contour ou de forme,
des indices de forme ou de texture,
des caractéristiques colorimétriques,
des caractéristiques de motif.

Une empreinte peut aussi être calculée par la méthode décrite dans le brevet EP1697862 dont la demanderesse est titulaire.

On peut aussi utiliser l'algorithme dit SIFT pour "Scale Invariant Feature Transform" en anglais ou l'algorithme dit SURF pour "Speeded Up Robust Features" en anglais, qui sont tous deux des descripteurs locaux qui consistent, dans un premier temps, à détecter un certain nombre de points d'intérêt dans l'image, pour ensuite calculer un descripteur décrivant localement l'image autour de chaque point d'intérêt. La qualité du descripteur est mesurée par sa robustesse aux changements possibles que peut subir une image, en l'occurrence le changement d'échelle et la rotation.

Pour l'algorithme SIFT, décrit notamment dans la publication D. Lowe. Object recognition from local scale-invariant features. IEEE International Conférence on Computer Vision, pages 1150-1157, 1999, la détection des points est basée sur les différences des gaussiennes (DoG) obtenues par le calcul de la différence entre chaque couple d'images lissées par un filtre gaussien, en variant à chaque fois le paramètre sigma (c'est à dire la déviation standard) du filtre. Les DoG sont calculées pour différents niveaux d'échelle permettant d'introduire la notion de l'espace d'échelle. La détection des potentielles zones de points d'intérêt s'effectue en recherchant les extrema selon le plan de la dimension de l'image (x,y) et le plan du facteur d'échelle. Ensuite une étape de filtrage est nécessaire pour supprimer les points non pertinents, en éliminant par exemple les points dont le contraste est trop faible.

Le calcul du descripteur SIFT s'effectue sur une zone autour de chaque point d'intérêt par exemple de 16x16 pixels, subdivisée en 4x4 zones de 4x4 pixels. Sur chacune des 16 zones, un histogramme des orientations du gradient basé sur 8 intervalles est alors calculé. La concaténation des 16 histogrammes donne un vecteur descripteur de 128 valeurs.

Pour l'algorithme SURF, décrit notamment dans la publication H. Bay, T. Tuylelaars, and L. Van Gool. Surf : Speeded up robust features. European Conférence on Computer Vision, pages 404-417, 2006, la méthode consiste à utiliser le déterminant de la matrice Hessienne, à calculer une approximation des dérivées secondes des gaussiennes de l'image par le biais de filtres à différentes échelles en utilisant des masques de différentes tailles (par exemple 9x9, 15x15, 21x21, ...). Pour le calcul de l'orientation des points et les descripteurs autour des points, le principe est basé sur les sommes des réponses des ondelettes de Haar horizontales et verticales ainsi que leurs normes. La zone circulaire de description est divisée là encore en 16 régions. Une analyse en ondelettes est effectuée sur chaque région afin de construire le descripteur final. Ce dernier est constitué de la somme des gradients en x et en y ainsi que de la somme de leur norme respective pour l'ensemble des 16 régions. Le vecteur descripteur est ainsi constitué de 64 valeurs qui représentent des propriétés extraites à la fois dans l'espace normal et dans celui des échelles de grandeur.

A chaque sous-ensemble correspond une seule empreinte. On peut prévoir de stocker l'empreinte de chaque sous-ensemble sélectionné dans la base de données d'images de référence ou, de préférence, de calculer à la demande l'empreinte de chaque sous-ensemble sélectionné, ce qui permet non seulement de pouvoir faire évoluer les algorithmes de calcul des empreintes au cours du temps mais aussi de les faire évoluer indépendamment des images de références, des zones d'intérêt ou des sous-ensembles.

On peut prévoir de comparer 280 à une valeur seuil le résultat de la différence entre l'empreinte du sous-ensemble sélectionné de l'image de référence et l'empreinte du sous-ensemble correspondant de l'image test, ladite valeur du seuil dépendant de préférence des propriétés calculées dans les empreintes.

### Image test

On prévoit de sélectionner 130 le sous-ensemble de l'image test correspondant au sous-ensemble sélectionné dans l'image de référence.

On peut prévoir que l'image test comprend un identifiant, par exemple sous forme graphique (par exemple un composant optiquement variable), alphanumérique ou un code barre à deux dimensions, notamment tel qu'un datamatrix ou un code QR.

Dans ce cas, on peut prévoir des étapes de lecture optique de l'identifiant par un capteur optique, d'envoi du signal de sortie du capteur optique à un serveur en communication avec la base de données d'images de référence, et la sélection dans la base de données d'images de référence de l'image de référence correspondant à l'identifiant de l'image test lu, ce qui permet l'identification rapide de l'image de référence correspondante à l'image test.

On peut prévoir que l'image test comprend un ensemble de repères graphiques, ou amers, éventuellement intégrés à l'identifiant. La position des amers est connue, on peut donc indistinctement positionner un sous-ensemble de l'image test par rapport aux amers ou par rapport aux bords de l'image test. Grâce à cette caractéristique, même si l'image de référence ne comprend pas d'amers, la position d'un sous-ensemble de l'image de référence par rapport aux bords de l'image de référence permet de définir la position du sous-ensemble correspondant dans l'image test, par rapport aux amers ou par rapport aux bords de l'image test.

On peut prévoir une étape consistant à redresser 210 l'image test, qui subit parfois des déformations, en particulier une déformation trapézoïdale. Une telle déformation peut être décelée par exemple par la position des amers.

La sélection du sous-ensemble correspondant dans l'image test peut se faire de façon absolue, grâce aux coordonnées des pixels du sous-ensemble de l'image de référence, ou de façon relative, en définissant la position du sous-ensemble dans l'image test par rapport aux amers ou aux bords de l'image test, lesdites coordonnées étant envoyées par le serveur à l'objet communicant sur requête de celui-ci.

On prévoit alors de calculer l'empreinte dudit sous-ensemble sélectionné dans l'image test, correspondant au sous-ensemble sélectionné dans l'image de référence.

### Comparaison

Si l'image test est une copie authentique de l'image de référence, alors il existe une correspondance entre un sous-ensemble donné de l'image de référence et son sous-ensemble correspondant dans l'image test.

Une comparaison sur un ou plusieurs sous-ensembles est plus rapide que sur l'intégralité de l'image test et permet de sécuriser l'authentification de celle-ci pour des raisons exposées ultérieurement.

On peut prévoir en outre une étape consistant à authentifier 141 ladite image test en fonction du résultat de la comparaison.

La comparaison 140 d'un sous-ensemble de l'image test avec le sous-ensemble correspondant de l'image de référence peut être réalisée par tout moyen connu. Par exemple, on peut prévoir de comparer les valeurs d'un pixel d'un sous-ensemble de l'image de référence avec les valeurs du pixel correspondant de l'image test par exemple par la méthode de « cross-corrélation ». Cependant, une comparaison sur un pixel peut s'avérer insuffisante en termes de sécurité, ce pourquoi on préfère que le sous-ensemble de l'image de référence comprenne une pluralité de pixels. Dans ce cas, la comparaison consiste à comparer les valeurs de chaque pixel du sous-ensemble de l'image de référence avec les valeurs de chaque pixel correspondant, c'est-à-dire de mêmes coordonnées, du sous-ensemble correspondant de l'image test.

On peut aussi prévoir que la comparaison 140 comprend une étape consistant à calculer la différence entre l'empreinte d'un sous-ensemble sélectionné de l'image de référence et l'empreinte du sous-ensemble correspondant de l'image test ; et à comparer le résultat de la différence à une valeur seuil.

On peut prévoir que la valeur du seuil dépend des propriétés calculées dans une empreinte. Le choix d'une ou plusieurs valeurs seuil particulières et la comparaison à ce ou ces seuils permet de prendre en considération certaines altérations (rayures, poussières, décolorations, etc.) que peuvent subir certaines images test, certains supports d'images test, ou que peut subir une image source dont l'image test est une copie numérique.

### Application particulière

Pour illustrer un mode d'utilisation particulier de la présente invention, on se place dans une situation où un utilisateur souhaite prouver son identité de façon électronique, par exemple pour un paiement en ligne, grâce à un document d'identité dont il est titulaire.

Dans ce cas, le document d'identité est la source. La source comprend par exemple au moins l'un des éléments suivants : une photographie d'identité ou une reproduction graphique du visage du titulaire, un hologramme, des marqueurs de position (amers), des codes temporels, etc.

En l'espèce, l'image test est réalisée par capture ou numérisation 220 de la source grâce un capteur optique, et enregistrée 230 dans une mémoire. Le capteur optique est intégré à un objet communicant. Par « objet communicant» on entend tout moyen de communication radio fréquence portable équipé d'un calculateur, c'est à dire : téléphone portable, téléphone intelligent (*smartphone* par anglicisme), tablette, webcam reliée à un routeur / modem, ainsi que tout équipement optique monté sur tête (par exemple Google Glass (marque déposée), Oculus Rift (marque déposée) etc.

Comme vu précédemment, il est possible de déterminer la valeur des angles β et γ par l'objet communicant.

Dans un mode de réalisation, le serveur émet dans la requête d'instructions une valeur d'angle β' et une valeur d'angle γ' ou une séquence de couples de valeurs d'angles (β', γ') .

L'objet communicant détermine son inclinaison notamment grâce à un capteur intégré, ou à partir de sa vision des amers inclus dans l'image holographique.

On peut prévoir que l'objet communicant acquiert une image test, c'est à dire déclenche la prise de vue permettant de réaliser une image test, à chaque fois que son inclinaison est égale à un couple de valeurs d'angles (β', γ') reçues dans la requête.

Avantageusement, on peut prévoir en outre une fonction graphique consistant à afficher sur l'écran de l'objet communicant un indice graphique directionnel, en l'espèce un ensemble d'au moins une flèche, pour indiquer à l'opérateur manipulant l'objet communicant dans quelle(s) direction(s) incliner l'objet communicant pour que les valeurs d'angles (β, γ) mesurées ou déterminées par l'objet communicant atteignent les valeurs d'angles (β', γ') reçues dans la requête.

Dans un autre mode de réalisation, alternatif ou combinatoire au mode de réalisation précédent, la valeur des angles β et γ est émise par l'objet communicant pour chaque image test acquise et envoyée au serveur. Le serveur identifie alors l'image de référence correspondante grâce aux valeurs d'angles (β, γ) qui sont égales ou proches des valeurs d'angles (β', γ') de la requête ; où par « proche » on entend que la différence entre la valeur d'un angle β (respectivement γ) déterminé et celle de l'angle β' (respectivement γ') de la requête est inférieure à une valeur seuil.

### Communication objet communicant -> serveur

Pour chaque image test, on prévoit de transmettre une réponse depuis l'objet communicant vers le serveur.

La réponse comprend par exemple au moins le calcul de l'empreinte du sous-ensemble de l'image test correspondant au sous-ensemble sélectionné dans l'image de référence, ou le sous-ensemble correspondant extrait de l'image test. De préférence, le calcul d'empreinte est effectué dans l'objet communicant, ce qui est plus sûr vis-à-vis d'éventuelles écoutes des échanges entre l'objet communicant et le serveur.

L'empreinte de l'image test est alors comparée à l'empreinte correspondante de l'image de référence, de préférence sur le serveur.

Si ledit sous-ensemble (ou lesdits sous-ensembles) de l'image test correspond audit sous-ensemble (ou auxdits sous-ensembles) de l'image de référence alors l'image test est une copie authentique de l'image de référence, et l'image test est authentifiée.

On peut envoyer simultanément la requête d'instructions au serveur d'image de référence et à l'objet communicant. Ils peuvent alors renvoyer indépendamment leur calcul d'empreintes respectives à un serveur de comparaison. Ce dernier procède alors à la comparaison des deux réponses pour statuer sur l'authenticité de l'image test.

## Revendications

1. Procédé de comparaison d'une image test (IMGT) numérique à une image de référence (IMGR) numérique, mis en œuvre par ordinateur, comprenant une étape consistant à :
- identifier (100) au moins deux zones d'intérêt (IZ1, IZ2, IZ3, IZ4) dans l'image de référence, chaque zone d'intérêt comprenant un ensemble de pixels,
**caractérisé en ce qu'**il comprend des étapes consistant à :
- sélectionner (110) de façon aléatoire l'une au moins des zones d'intérêt identifiées dans l'image de référence,
- sélectionner (120) au moins un sous-ensemble (SAR) de l'image de référence, ledit sous-ensemble comprenant au moins un pixel d'au moins une zone d'intérêt sélectionnée,
- pour chaque sous-ensemble sélectionné de l'image de référence, sélectionner (130) par similarité un sous-ensemble (SAT) correspondant de l'image test, et
- comparer (140) ledit sous-ensemble de l'image test (SAT) au sous-ensemble correspondant (SAR) de l'image de référence.

2. Procédé selon la revendication 1, comprenant en outre une étape consistant à authentifier (141) ladite image test en fonction du résultat de la comparaison.

3. Procédé selon l'une quelconque des revendications précédentes, comprenant au moins l'une des étapes consistant à :
- sélectionner (150) de façon aléatoire une forme géométrique donnée parmi un ensemble de formes géométriques prédéterminées enregistrées dans une mémoire, et appliquer (160) la forme sélectionnée audit sous-ensemble (SAR) sélectionné dans l'image de référence ; et
- sélectionner (170) de façon aléatoire une taille donnée parmi un ensemble de tailles prédéterminées enregistrées dans une mémoire, ou sélectionner (171) la taille du sous-ensemble en fonction de la définition de l'image test, et appliquer (180) ladite taille sélectionnée audit sous-ensemble de l'image de référence.

4. Procédé selon l'une quelconque des revendications précédentes, comprenant des étapes consistant à :
- orienter (190) ledit sous-ensemble (SAR) de l'image de référence dans le plan de l'image, par rapport à une droite de référence, selon un angle d'orientation (α) dont la valeur est aléatoire,
- enregistrer (191) dans une mémoire ladite valeur de l'angle d'orientation (α), et
- orienter (200) ledit sous-ensemble correspondant (SAT) de l'image test selon ledit angle d'orientation (α).

5. Procédé selon l'une quelconque des revendications précédentes, comprenant en outre une étape (210) consistant à redresser l'image test.

6. Procédé selon l'une quelconque des revendications précédentes, dans lequel l'image test est obtenue par une étape consistant à :
- numériser (220) une source (SRC) grâce à un capteur optique d'un objet communicant équipé d'un flash pilotable ou un capteur optique de webcam équipée d'un flash pilotable et connectée électriquement à un ordinateur,
Le procédé comprenant en outre :
- enregistrer (230) dans une mémoire respectivement dudit objet communicant ou dudit ordinateur ladite image test, et
- activer (240) sélectivement le flash selon une séquence de valeurs binaires de préférence aléatoire ; le flash étant sélectivement allumé selon l'une des valeurs binaires et éteint selon l'autre des valeurs binaires.

7. Procédé selon l'une quelconque des revendications précédentes, dans lequel l'étape consistant à identifier (100) au moins deux zones d'intérêt comprend une étape consistant à comparer (250) à une valeur seuil les variations de gradient de luminance, éventuellement dans plusieurs directions, d'un ensemble de pixels proches les uns des autres dans l'image de référence (IMGR) pour identifier une zone d'intérêt.

8. Procédé selon l'une quelconque des revendications précédentes, comprenant en outre des étapes consistant à :
- calculer (260) une empreinte du sous-ensemble sélectionné dans l'image de référence (IMGR), et
- calculer (270) une empreinte correspondante du sous-ensemble correspondant dans l'image test (IMGT) ;
l'étape de comparaison (140) consistant à comparer l'empreinte du sous-ensemble (SAR) sélectionné dans l'image de référence à l'empreinte du sous-ensemble correspondant (SAT) sélectionné dans l'image test ;
le procédé comprenant optionnellement en outre une étape (280) consistant à comparer le résultat de la différence entre l'empreinte du sous-ensemble sélectionné de l'image de référence et l'empreinte du sous-ensemble correspondant de l'image test à une valeur seuil, ladite valeur du seuil dépendant de préférence des propriétés calculées dans les empreintes.

9. Procédé selon l'une quelconque des revendications précédentes, dans lequel l'image de référence est obtenue à partir d'une source comprenant un hologramme plan, ledit hologramme comprenant un ensemble de sous-images holographiques dont le contenu informatif peut varier en fonction de l'angle d'observation, de l'angle d'éclairage et de la nature du moyen d'éclairement,
Le procédé comprenant :
mettre en mouvement relatif un capteur optique et l'hologramme selon une pluralité d'angles d'inclinaison,
enregistrer un ensemble d'images test de l'hologramme pour une pluralité d'inclinaisons (β, γ) du capteur optique, et
déterminer la valeur de l'inclinaison (β, γ) du capteur optique à chaque image test enregistrée.

10. Procédé selon la revendication 9, comprenant en outre des étapes consistant à :
envoyer depuis un serveur à un objet communicant comprenant ledit capteur optique une requête d'instructions comprenant une pluralité d'inclinaisons (β', γ'),
afficher sur un écran dudit objet communicant un indice graphique directionnel indiquant dans quelle(s) direction(s) incliner ledit objet communicant pour atteindre les valeurs d'angles (β, γ) reçues dans la requête.

11. Programme d'ordinateur comprenant des instructions de code de programme pour la mise en œuvre du procédé selon l'une quelconque des revendications précédentes lorsque ledit programme est exécuté sur un ordinateur.

## Patentansprüche

1. Verfahren zum Vergleichen eines digitalen Testbildes (IMGT) mit einem digitalen Referenzbild (IMGR), das von einem Computer ausgeführt wird, umfassend einen Schritt, der in Folgendem besteht:
- Identifizieren (100) von mindestens zwei Bereichen von Interesse (IZ1, IZ2, IZ3, IZ4) in dem Referenzbild, wobei jeder Bereich von Interesse eine Menge von Pixeln umfasst,
**dadurch gekennzeichnet, dass** es Schritte umfasst, die in Folgendem bestehen:
- zufälliges Auswählen (110) mindestens eines der im Referenzbild identifizierten Bereiche von Interesse,
- Auswählen (120) mindestens einer Teilmenge (SAR) des Referenzbildes, wobei die Teilmenge mindestens ein Pixel mindestens eines ausgewählten Bereichs von Interesse umfasst,
- Auswählen (130) einer entsprechenden Teilmenge (SAT) des Testbildes anhand von Ähnlichkeit für jede ausgewählte Teilmenge des Referenzbildes und
- Vergleichen (140) der Teilmenge des Testbildes (SAT) mit der entsprechenden Teilmenge (SAR) des Referenzbildes.

2. Verfahren nach Anspruch 1, das ferner einen Schritt umfasst, der darin besteht, das Testbild in Abhängigkeit vom Ergebnis des Vergleichs zu authentifizieren (141).

3. Verfahren nach einem der vorhergehenden Ansprüche, das mindestens einen der Schritte umfasst, die in Folgendem bestehen:
- zufälliges Auswählen (150) einer gegebenen geometrischen Form unter einer Menge vorbestimmter geometrischer Formen, die in einem Speicher gespeichert sind, und Anwenden (160) der ausgewählten Form auf die ausgewählte Teilmenge (SAR) im Referenzbild; und
- zufälliges Auswählen (170) einer gegebenen Größe unter einer Menge vorbestimmter Größen, die in einem Speicher gespeichert sind, oder Auswählen (171) der Größe der Teilmenge in Abhängigkeit von der Auflösung des Testbildes und Anwenden (180) der ausgewählten Größe auf die Teilmenge des Referenzbildes.

4. Verfahren nach einem der vorhergehenden Ansprüche, das Schritte umfasst, die in Folgendem bestehen:
- Ausrichten (190) der Teilmenge (SAR) des Referenzbildes in der Ebene des Bildes in Bezug auf eine Referenzgerade gemäß einem Ausrichtungswinkel (α), dessen Wert zufällig ist,
- Speichern (191) des Werts des Ausrichtungswinkels (α) in einem Speicher und
- Ausrichten (200) der entsprechenden Teilmenge (SAT) des Testbildes gemäß dem Ausrichtungswinkel (α).

5. Verfahren nach einem der vorhergehenden Ansprüche, das ferner einen Schritt (210) umfasst, der darin besteht, das Testbild geradezurichten.

6. Verfahren nach einem der vorhergehenden Ansprüche, bei dem das Testbild durch einen Schritt erhalten wird, der in Folgendem besteht:
- Digitalisieren (220) einer Quelle (SRC) mithilfe eines optischen Sensors eines kommunizierenden Objekts, das mit einem ansteuerbaren Blitzgerät ausgerüstet ist, oder eines optischen Sensors einer Webcam, die mit einem ansteuerbaren Blitzgerät ausgerüstet ist und elektrisch an einen Computer angeschlossen ist,
wobei das Verfahren ferner Folgendes umfasst:
- Speichern (230) des Testbildes in einem jeweiligen Speicher des kommunizierenden Objekts oder des Computers und
- selektives Aktivieren (240) des Blitzgeräts gemäß einer bevorzugt zufälligen Sequenz binärer Werte, wobei das Blitzgerät selektiv gemäß einem der binären Werte eingeschaltet und gemäß dem anderen der binären Werte ausgeschaltet wird.

7. Verfahren nach einem der vorhergehenden Ansprüche, bei dem der Schritt, der darin besteht, mindestens zwei Bereiche von Interesse zu identifizieren (100), einen Schritt umfasst, der darin besteht, die Leuchtdichtegradientenänderungen, gegebenenfalls in mehreren Richtungen, einer Menge von nahe beieinander liegenden Pixeln im Referenzbild (IMGR) mit einem Schwellenwert zu vergleichen (250), um einen Bereich von Interesse zu identifizieren.

8. Verfahren nach einem der vorhergehenden Ansprüche, das ferner Schritte umfasst, die in Folgendem bestehen:
- Berechnen (260) eines Abdrucks der in dem Referenzbild (IMGR) ausgewählten Teilmenge und
- Berechnen (270) eines entsprechenden Abdrucks der entsprechenden Teilmenge im Testbild (IMGT);
wobei der Schritt des Vergleichens (140) darin besteht, den Abdruck der im Referenzbild ausgewählten Teilmenge (SAR) mit dem Abdruck der entsprechenden im Testbild ausgewählten Teilmenge (SAT) zu vergleichen;
wobei das Verfahren optional ferner einen Schritt (280) umfasst, der darin besteht, das Ergebnis der Differenz zwischen dem Abdruck der ausgewählten Teilmenge des Referenzbildes und dem Abdruck der entsprechenden Teilmenge des Testbildes mit einem Schwellenwert zu vergleichen, wobei der Schwellenwert bevorzugt von den in den Abdrücken berechneten Eigenschaften abhängt.

9. Verfahren nach einem der vorhergehenden Ansprüche, bei dem das Referenzbild ausgehend von einer Quelle erhalten wird, die ein ebenes Hologramm umfasst, wobei das Hologramm eine Menge von holographischen Teilbildern umfasst, deren Informationsgehalt in Abhängigkeit vom Betrachtungswinkel, vom Beleuchtungswinkel und von der Art des Beleuchtungsmittels variieren kann,
wobei das Verfahren Folgendes umfasst:
Inbewegungversetzen eines optischen Sensors und des Hologramms relativ zueinander entsprechend einer Mehrzahl von Neigungswinkeln,
Speichern einer Menge von Testbildern des Hologramms für eine Mehrzahl von Neigungen (β, γ) des optischen Sensors und
Bestimmen des Werts der Neigung (β, γ) des optischen Sensors für jedes gespeicherte Testbild.

10. Verfahren nach Anspruch 9, das ferner Schritte umfasst, die in Folgendem bestehen:
Senden einer Anweisungsanfrage, die eine Mehrzahl von Neigungen (β',γ') umfasst, von einem Server an ein kommunizierendes Objekt, das den optischen Sensor umfasst,
Anzeigen eines grafischen Richtungszeichens auf einem Bildschirm des kommunizierenden Objekts, das angibt, in welche Richtung(en) das kommunizierende Objekt geneigt werden muss, um die in der Anfrage erhaltenen Winkelwerte (β, γ) zu erreichen.

11. Computerprogramm, das Programmcodeanweisungen umfasst, die bei der Ausführung des Programms auf einem Computer das Verfahren nach einem der vorhergehenden Ansprüche ausführen.

## Claims

1. Method for comparing a digital test image (IMGT) with a digital reference image (IMGR), said method being implemented by a computer and comprising a step of:
- identifying (100) at least two areas of interest (IZ1, IZ2, IZ3, IZ4) in the reference image, each area of interest comprising a set of pixels,
said method being **characterized in that** it comprises steps of:
- randomly selecting (110) at least one of the areas of interest identified in the reference image,
- selecting (120) at least one subset (SAR) of the reference image, said subset comprising at least one pixel of at least one selected area of interest,
- for each selected subset of the reference image, selecting (130), on the basis of similarity, a corresponding subset (SAT) of the test image, and
- comparing (140) said subset of the test image (SAT) with the corresponding subset (SAR) of the reference image.

2. Method according to Claim 1, further comprising a step of authenticating (141) said test image depending on the result of the comparison.

3. Method according to either one of the preceding claims, comprising at least one of the following steps:
- randomly selecting (150) a given geometric shape from among a set of predetermined geometric shapes recorded in a memory, and applying (160) the selected shape to said subset (SAR) selected in the reference image; and
- randomly selecting (170) a given size from among a set of predetermined sizes recorded in a memory, or selecting (171) the size of the subset depending on the definition of the test image, and applying (180) said selected size to said subset of the reference image.

4. Method according to any one of the preceding claims, comprising steps of:
- orienting (190) said subset (SAR) of the reference image at an angle of orientation (α), the value of which is random, in the plane of the image with respect to a reference straight line,
- recording (191) said value of the angle of orientation (α) in a memory, and
- orienting (200) said corresponding subset (SAT) of the test image at said angle of orientation (α).

5. Method according to any one of the preceding claims, further comprising a step (210) of straightening the test image.

6. Method according to any one of the preceding claims, wherein the test image is obtained by a step of:
- digitizing (220) a source (SRC) using an optical sensor of a communicating object provided with a controllable flash or an optical sensor of a webcam provided with a controllable flash and electrically connected to a computer,
the method further comprising:
- recording (230) said test image in a memory of said communicating object or of said computer, respectively, and
- selectively activating (240) the flash by way of a preferably random sequence of binary values; the flash being selectively turned on by way of one of the binary values and turned off by way of the other binary value.

7. Method according to any one of the preceding claims, wherein the step of identifying (100) at least two areas of interest comprises a step of comparing (250) the variations in luminance gradient, potentially in several directions, of a set of pixels that are close to one another in the reference image (IMGR) with a threshold value in order to identify an area of interest.

8. Method according to any one of the preceding claims, further comprising steps of:
- calculating (260) a fingerprint of the subset selected in the reference image (IMGR), and
- calculating (270) a corresponding fingerprint of the corresponding subset in the test image (IMGT);
the comparing step (140) consisting in comparing the fingerprint of the subset (SAR) selected in the reference image with the fingerprint of the corresponding subset (SAT) selected in the test image;
the method optionally further comprising a step (280) of comparing the result of the difference between the fingerprint of the selected subset of the reference image and the fingerprint of the corresponding subset of the test image with a threshold value, said threshold value preferably being dependent on the properties calculated in the fingerprints.

9. Method according to any one of the preceding claims, wherein the reference image is obtained from a source comprising a flat hologram, said hologram comprising a set of holographic sub-images, the information content of which may vary depending on the viewing angle, the lighting angle and the nature of the lighting means,
the method comprising:
causing an optical sensor and the hologram to move relative to one another through a plurality of angles of inclination,
recording a set of test images of the hologram for a plurality of inclinations (β, γ) of the optical sensor, and
determining the value of the inclination (β, γ) of the optical sensor for each registered test image.

10. Method according to Claim 9, further comprising steps of:
sending a request for instructions comprising a plurality of inclinations (β', γ') from a server to a communicating object comprising said optical sensor,
displaying on a screen of said communicating object a directional graphical indicator that indicates in which direction or directions to incline said communicating object in order to achieve the angle values (β, γ) received in the request.

11. Computer program comprising program code instructions for implementing the method according to any one of the preceding claims when said program is executed on a computer.
